# EUROPEAN PATENT SPECIFICATION

(11) **EP 1 596 651 B1**
(45) Date of publication and mention of the grant of the patent: **12.07.2006**
(21) Application number: 04710462.5
(22) Date of filing: 12.02.2004
(51) Int. Cl.: A01K 1/01

(54) **A SCRAPER RAIL DRIVE MECHANISM**
KRATZERSCHIENENANTRIEBSMECHANISMUS
MECANISME D'ENTRAINEMENT A RAIL POUR RACLOIRS

(30) Priority: 13.02.2003 IE 20030099
(43) Date of publication of application: 23.11.2005
(73) Proprietor: O'Donovan, John, County Cork (IE); O'Donovan, Patrick, Blarney, County Cork (IE)
(72) Inventor: O'Donovan, John, County Cork (IE); O'Donovan, Patrick, Blarney, County Cork (IE)
(74) Representative: Weldon, Michael James
(86) International application number: PCT/IE2004/000019
(87) International publication number: WO 2004/071905

(56) References cited:
- EP-A- 0 281 548
- EP-A- 0 770 325
- CH-A- 629 152
- FR-A- 2 803 171

## Description

### Field of the Invention

The invention relates to drive mechanisms for rails of slurry scraper systems.

### Prior Art Discussion

Such systems are described, for example, in FR2803171 and EP0770325. The principle of operation is that a rail is driven with a reciprocating motion of a desired stroke. Slurry scrapers are mounted on a carriage which has a pawl which is driven while in an inclined position by teeth on the rail in successive rail strokes. At the end of the passageway the pawl flips over to be inclined in the opposite sense so that the carriage is driven in the opposite direction along the passageway.

This system has worked satisfactorily to the extent that it effectively scrapes away slurry and it is safe because the carriage disengages from the rail when an obstruction is encountered. However, in practice the end of the passageway where the drive mechanism is located typically has a build-up of slurry around the mechanism, which is inaccessible to the scrapers. This build-up must be manually cleared, and it can over time cause damage to the mechanism. The conventional approach to addressing this problem is to install the drive mechanism at the far side of a wall at the end of the passageway, as illustrated in EP0770325. However this necessitates construction work, and often internal space will not be available, in which case the drive mechanism must be installed outdoors. Another problem is that there is often an opening in the wall, allowing draughts which can be unhealthy for the animals in winter.

The invention addresses this problem.

### SUMMARY OF THE INVENTION

According to the invention, there is provided a drive mechanism for a slurry scraper system rail, the drive mechanism comprising an actuator and a connector for connecting the actuator to a rail to drive the rail in a reciprocating motion, wherein the actuator and the connector at least partly fit within the rail.

In one embodiment, the actuator comprises flanges for securing to the ground or a wall.

In another embodiment, the connector comprises a bracket for securing to the rail.

In a further embodiment, the bracket comprises a vertical plate secured to the actuator and a plate for securing to the rail.

In one embodiment, the plate for securing to the rail is configured to be pressed against a wall of the rail by welding or by a fastener.

In another embodiment, the actuator comprises a ram comprising a cylinder and a piston, the piston supporting the connector and the ram fitting within the rail.

In a further embodiment, the ram is an hydraulic ram.

In one embodiment, the drive mechanism further comprises a protective cover for the actuator.

In another embodiment, the protective cover surrounds the actuator and is configured to fit within the rail.

In a further embodiment, the cover is of inverted channel shape.

In one embodiment, the cover comprises an opening to accommodate flipping of a pawl of a scraper carriage.

In another embodiment, the opening comprises a slot in a top flange of the cover.

In a further embodiment, the cover accommodates ram cylinder supply lines for the actuator.

In one embodiment, the cover comprises at least one flange for securing to the ground.

In another embodiment, the drive mechanism further comprises ducting for protection of actuator supply lines on a wall at the end of an area to be cleaned, said ducting allowing passage of the supply lines within the rail.

In a further embodiment, the drive mechanism further comprises a sensor for detecting when a scraper reaches the end of an area to be cleaned.

In another aspect, the invention provides a slurry scraper system comprising a drive mechanism as defined above, a rail, and a carriage for movement along the rail and supporting scraper blades.

In one embodiment, the rail is of inverted channel configuration.

In another embodiment, the rail comprises a plurality of interconnected sections.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1(a) is a perspective view of a drive mechanism, and Figs. 1(b) and 1(c) are more detailed perspective views of parts of the mechanism;
Figs. 2 and 3 are partly cut-away side and plan views of the mechanism of Figs. 1(a) to 1(c);
Fig. 4 is a partly cut-away side view and a plan view of a variation of the mechanism;
Fig. 5(a) is a side view of an hydraulic ram of the mechanism, and Figs. 5(b) and 5(c) are cross-sectional side views respectively of a ram protective cover and of a rail; and
Figs. 6(a) and 6(b) are side and end cross-sectional views of part of the mechanism, showing connection of the ram to the rail.

### Description of the Embodiments

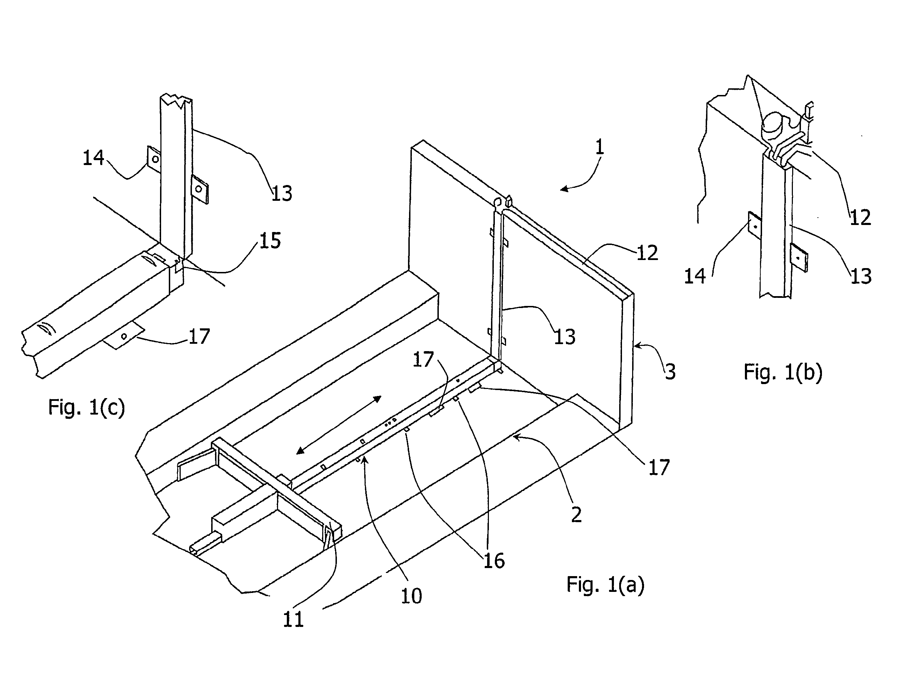

Referring to Figs. 1 to 3 inclusive a slurry scraper drive mechanism 1 drives a rail 10 in an animal passageway 2 terminating in a wall 3. The drive mechanism comprises hydraulic supply lines 12 routed from a remote controller (not shown) having solenoid switches, and extending down the wall 3 within a protective duct 13 fastened to the wall by flanges 14. At ground level the lines 12 turn at right angles and extend under the rail 10. Apart from bolt flanges 16 and 17, the remainder of the mechanism is hidden beneath the rail 10.

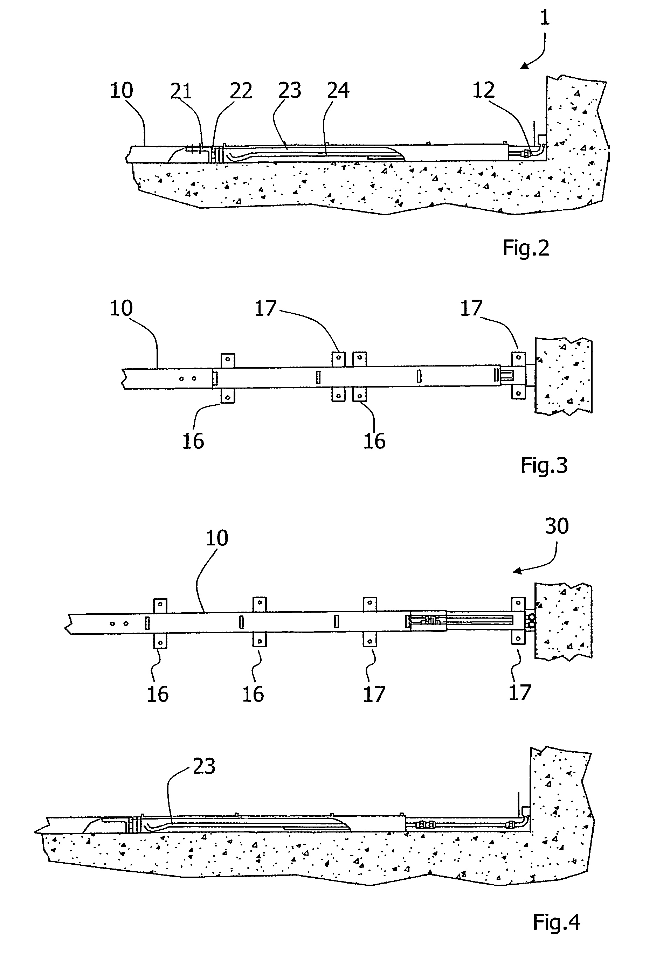

As shown in Fig. 2, an hydraulic ram comprising a piston 22 extending from a cylinder 23 is connected to an L-shaped bracket 21. The bracket 21 is bolted to the top web of the rail 10. A contracting hydraulic supply line 24 is also shown in Fig. 2. The flanges 16 secure the ram to the ground, and the flanges 17 bolt a protective cover (described below) to the ground.

Fig. 4 shows a drive mechanism 30 which differs from the mechanism 1 only in the length of the hydraulic supply lines 23, the ram being further from the wall 3.

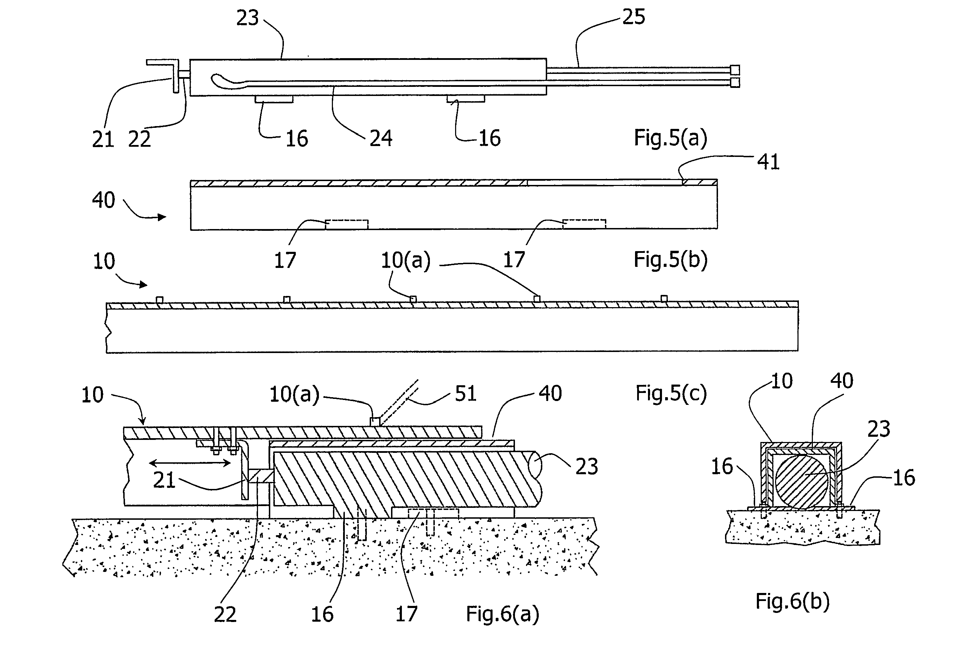

Referring to Fig. 5(a) the hydraulic ram is shown in more detail. A supply line 25 is connected at the rear end of the cylinder 23 for delivering oil for the outward stroke of the piston 22. The flanges 16 are welded to the underside of the cylinder 23. Fig. 5(a) shows the piston 22 at its retracted position.

Referring to Fig. 5(b) the protective cover is indicated by the numeral 40. It is of inverted channel configuration, having an elongate slot 41 in the flange. The purpose of this is to allow the pawl to flip over in a pivotal motion for changing scraper travel direction at the end of the passageway.

The rail 10 is shown in Fig. 5(c). This is of inverted channel construction, having a series of teeth 10(a) on the top of its flange.

The assembly of these parts is shown in more detail in Figs. 6(a) and 6(b). The hydraulic ram fits neatly within the protective cover 40, both the ram and the cover being securely bolted to the ground by the flanges 16 and 17. The cover 40 prevents dirt from accessing the ram and its supply lines 24 and 25 to a significant extent. The slot 41 allows the pawl to flip under, passing through the slot 41 and between the supply lines 24 and 25.

The bracket 21 is bolted by two bolts to the rail 10, so that the rail 10 is driven in a reciprocating motion with the strokes of the piston 22. In this motion, the cover 40 acts as a guide, helping to maintain alignment of the rail. The rail 10 comprises sections bolted together. Thus, if access to the drive mechanism is required the overlying rail section can be removed in a modular manner.

It will be apparent from the drawing of Fig. 1(a) that the drive mechanism does not take up any space in the passageway outside of the rail 10. This allows the carriage 11 to simply keep moving to the end of the passageway, the end position being detected by a magnetic sensor 15 (shown in Fig. 1(a)). At this position the pawl lifts the carriage and flips under to engage the teeth 10(a) in the opposite sense. The carriage is then successively pushed away along the passageway from a position over the mechanism. Thus, the scraper covers the entire length of the passageway, wall to wall, and there is no need to mount a mechanism at the far side of the wall 3. This is of enormous practical benefit, avoiding external installation of equipment and draughts into the animal house. Also, by fitting the drive mechanism into the rail, there is no need to attempt to fit it below floor level, where it would be awkward to install and would gather dirt over time. Further, by mounting all controlling and switching equipment remotely they are much less likely to be damaged.

The invention is not limited to the embodiments described but may be varied in construction and detail. For example, the mechanism may have a drive other than an hydraulic ram, such as a motor-driven screw mechanism. The mechanism may be mounted at any other location along the length of the rail, whenever it is convenient for access to supply lines.

## Claims

1. A drive mechanism for a slurry scraper system rail, the drive mechanism comprising an actuator and a connector for connecting the actuator to a rail to drive the rail in a reciprocating motion, wherein the actuator (22, 23) and the connector (21) at least partly fit within the rail.

2. A drive mechanism as claimed in claim 1, wherein the actuator comprises flanges (16) for securing to the ground or a wall.

3. A drive mechanism as claimed in claim 1 or 2, wherein the connector comprises a bracket (21) for securing to the rail (10).

4. A drive mechanism as claimed in claim 3, wherein the bracket comprises a vertical plate secured to the actuator (22) and a plate for securing to the rail (10).

5. A drive mechanism as claimed in claim 4, wherein the plate for securing to the rail is configured to be pressed against a wall of the rail by welding or by a fastener.

6. A drive mechanism as claimed in any preceding claim, wherein the actuator comprises a ram comprising a cylinder (23) and a piston (22), the piston supporting the connector (21) and the ram fitting within the rail.

7. A drive mechanism as claimed in claim 6, wherein the ram is an hydraulic ram.

8. A drive mechanism as claimed in any preceding claim, wherein the drive mechanism further comprises a protective cover (40) for the actuator.

9. A drive mechanism as claimed in claim 8, wherein the protective cover surrounds the actuator and is configured to fit within the rail.

10. A drive mechanism as claimed in claim 9, wherein the cover (40) is of inverted channel shape.

11. A drive mechanism as claimed in any of claims 8 to 10, wherein the cover (40) comprises an opening (41) to accommodate flipping of a pawl of a scraper carriage.

12. A drive mechanism as claimed in claim 11, wherein the opening comprises a slot (41) in a top flange of the cover.

13. A drive mechanism as claimed in any of claims 8 to 12, wherein the cover accommodates ram cylinder supply lines (24, 25) for the actuator.

14. A drive mechanism as claimed in any of claims 8 to 13, wherein the cover comprises at least one flange (17) for securing to the ground.

15. A drive mechanism as claimed in any preceding claim, further comprising ducting (13) for protection of actuator supply lines on a wall (3) at the end of an area to be cleaned, said ducting allowing passage of the supply lines within the rail.

16. A drive mechanism as claimed in any preceding claim, further comprising a sensor (15) for detecting when a scraper reaches the end of an area to be cleaned.

17. A slurry scraper system comprising a drive mechanism of any preceding claim, a rail, and a carriage for movement along the rail and supporting scraper blades.

18. A system as claimed in claim 17, wherein the rail is of inverted channel configuration.

19. A system as claimed in claim 17 or 18, wherein the rail comprises a plurality of interconnected sections.

## Patentansprüche

1. Antriebsmechanismus für eine Entmistungsschieberanlagenschiene, wobei der Antriebsmechanismus einen Stellantrieb und einen Verbinder zum Verbinden des Stellantriebs mit einer Schiene zum Antreiben der Schiene in einer Hin- und Herbewegung umfasst, wobei der Stellantrieb (22, 23) und der Verbinder (21) wenigstens teilweise in die Schiene passen.

2. Antriebsmechanismus nach Anspruch 1, bei dem der Stellantrieb Flansche (16) zur Befestigung am Boden oder an einer Wand umfasst.

3. Antriebsmechanismus nach Anspruch 1 oder 2, bei dem der Verbinder eine Halterung (21) zum Befestigen an der Schiene (10) umfasst.

4. Antriebsmechanismus nach Anspruch 3, bei dem die Halterung eine an dem Stellantrieb (22) befestigte vertikale Platte und eine Platte zum Befestigen an der Schiene (10) umfasst.

5. Antriebsmechanismus nach Anspruch 4, bei dem die Platte zum Befestigen an der Schiene konfiguriert ist, um durch Schweißen oder durch ein Befestigungselement an eine Wand der Schiene angepresst zu werden.

6. Antriebsmechanismus nach einem der vorhergehenden Ansprüche, bei dem der Stellantrieb einen Druckzylinder umfasst, der einen Zylinder (23) und einen Kolben (22) umfasst, wobei der Kolben den Verbinder (21) trägt und der Druckzylinder in die Schiene passt.

7. Antriebsmechanismus nach Anspruch 6, bei dem der Druckzylinder ein hydraulischer Druckzylinder ist.

8. Antriebsmechanismus nach einem der vorhergehenden Ansprüche, wobei der Antriebsmechanismus ferner eine Schutzabdeckung (40) für den Stellantrieb umfasst.

9. Antriebsmechanismus nach Anspruch 8, bei dem die Schutzabdeckung den Stellantrieb umgibt und so konfiguriert ist, dass sie in die Schiene passt.

10. Antriebsmechanismus nach Anspruch 9, bei dem die Abdeckung (40) eine umgekehrte U-Form hat.

11. Antriebsmechanismus nach einem der Ansprüche 8 bis 10, bei dem die Abdeckung (40) eine Öffnung (41) umfasst, um das Umklappen einer Klinke eines Schieberschlittens zuzulassen.

12. Antriebsmechanismus nach Anspruch 11, bei dem die Öffnung eine Aussparung (41) in einem oberen Flansch der Abdeckung umfasst.

13. Antriebsmechanismus nach einem der Ansprüche 8 bis 12, bei dem die Abdeckung Druckzylinderversorgungsleitungen (24, 25) für den Stellantrieb aufnimmt.

14. Antriebsmechanismus nach einem der Ansprüche 8 bis 13, bei dem die Abdeckung wenigstens einen Flansch (17) zum Befestigen am Boden umfasst.

15. Antriebsmechanismus nach einem der vorhergehenden Ansprüche, der ferner einen Leitungskanalzug (13) zum Schutz von Stellantriebsversorgungsleitungen an einer Wand (3) am Ende des zu säubernden Bereichs umfasst, wobei der Leitungskanalzug das Hindurchführen der Versorgungsleitungen in der Schiene zulässt.

16. Antriebsmechanismus nach einem der vorhergehenden Ansprüche, der ferner einen Sensor (15) hat zum Erkennen, wenn ein Schieber das Ende eines zu säubernden Bereichs erreicht.

17. Entmistungsschieberanlage, die einen Antriebsmechanismus nach einem der vorhergehenden Ansprüche, eine Schiene und einen Schlitten zum Bewegen entlang der Schiene und zum Tragen von Schieberblättern umfasst.

18. Anlage nach Anspruch 17, bei der die Schiene eine umgekehrte U-Konfiguration hat.

19. Anlage nach Anspruch 17 oder 18, bei der die Schiene eine Mehrzahl von miteinander verbundenen Abschnitten umfasst.

## Revendications

1. Mécanisme d'entraînement destiné à un rail d'un système de raclage des boues, le mécanisme d'entraînement comportant un actionneur et un connecteur permettant de connecter l'actionneur à un rail en vue d'entraîner le rail en un mouvement de va-et-vient, dans lequel l'actionneur (22, 23) et le connecteur (21) sont installés au moins partiellement à l'intérieur du rail.

2. Mécanisme d'entraînement selon la revendication 1, dans lequel l'actionneur comporte des brides (16) destinées à des fins de fixation sur le sol ou sur une paroi.

3. Mécanisme d'entraînement selon la revendication 1 ou la revendication 2, dans lequel le connecteur comporte un support (21) destiné à des fins de fixation sur le rail (10).

4. Mécanisme d'entraînement selon la revendication 3, dans lequel le support comporte une plaque verticale fixée sur l'actionneur (22) et une plaque destinée à des fins de fixation sur le rail (10).

5. Mécanisme d'entraînement selon la revendication 4, dans lequel la plaque destinée à des fins de fixation sur le rail est configurée pour être appuyée contre une paroi du rail par soudage ou par une attache.

6. Mécanisme d'entraînement selon l'une quelconque des revendications précédentes, dans lequel l'actionneur comporte un bélier comportant un vérin (23) et un piston (22), le piston supportant le connecteur (21) et le bélier étant installé à l'intérieur du rail.

7. Mécanisme d'entraînement selon la revendication 6, dans lequel le bélier est un bélier hydraulique.

8. Mécanisme d'entraînement selon l'une quelconque des revendications précédentes, dans lequel le mécanisme d'entraînement comporte par ailleurs un capot de protection (40) pour l'actionneur.

9. Mécanisme d'entraînement selon la revendication 8, dans lequel le capot de protection entoure l'actionneur et est configuré pour être installé à l'intérieur du rail.

10. Mécanisme d'entraînement selon la revendication 9, dans lequel le capot (40) est d'une forme du type profilé en U inversé.

11. Mécanisme d'entraînement selon l'une quelconque des revendications 8 à 10, dans lequel le capot (40) comporte une ouverture (41) destinée à permettre le basculement d'un cliquet d'un chariot de raclage.

12. Mécanisme d'entraînement selon la revendication 11, dans lequel l'ouverture comporte une fente (41) dans une bride supérieure du capot.

13. Mécanisme d'entraînement selon l'une quelconque des revendications 8 à 12, dans lequel le capot accueille les conduites d'alimentation (24, 25) du vérin du bélier pour l'actionneur.

14. Mécanisme d'entraînement selon l'une quelconque des revendications 8 à 13, dans lequel le capot comporte au moins une bride (17) destinée à des fins de fixation sur le sol.

15. Mécanisme d'entraînement selon l'une quelconque des revendications précédentes, comportant par ailleurs une gaine (13) destinée à la protection des conduites d'alimentation de l'actionneur sur une paroi (3) à l'extrémité d'une zone devant être nettoyée, ladite gaine permettant le passage des conduites d'alimentation à l'intérieur du rail.

16. Mécanisme d'entraînement selon l'une quelconque des revendications précédentes, comportant par ailleurs un capteur (15) permettant de détecter quand un racloir atteint l'extrémité d'une zone devant être nettoyée.

17. Système de raclage des boues comportant un mécanisme d'entraînement selon l'une quelconque des revendications précédentes, un rail, et un chariot à des fins de mouvement le long du rail et supportant des lames de raclage.

18. Système selon la revendication 17, dans lequel le rail est d'une configuration du type profilé en U inversé.

19. Système selon la revendication 17 ou la revendication 18, dans lequel le rail comporte une pluralité de sections interconnectées.
